Europäisches Patentamt

European Patent Office

Office européen des brevets

(11) Publication number: **0 034 676**
**B1**

(12) **EUROPEAN PATENT SPECIFICATION**

(45) Date of publication of patent specification: **12.09.84**

(21) Application number: **80302958.6**

(22) Date of filing: **27.08.80**

(51) Int. Cl.³: **G 01 N 1/10**

(54) **Apparatus for obtaining a sample of liquid from near the bottom of a liquid-filled container.**

(30) Priority: **25.02.80 US 124015**

(43) Date of publication of application:
**02.09.81 Bulletin 81/35**

(45) Publication of the grant of the patent:
**12.09.84 Bulletin 84/37**

(84) Designated Contracting States:
**DE GB SE**

(56) References cited:
**US-A-1 759 444**
**US-A-2 678 563**
**US-A-2 699 680**

(73) Proprietor: **MOBIL OIL CORPORATION**
**150 East 42nd Street**
**New York New York 10017 (US)**

(72) Inventor: **Ueberschaer, Hubert Joachim**
**17 Andover Road**
**Hartsdale New York 10530 (US)**

(74) Representative: **West, Alan Harry**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus for obtaining a sample of liquid from near the bottom of a liquid-filled container and, more particularly, relates to an apparatus for obtaining a sample from a layer of water or water-oil emulsion underlying crude oil in a cargo tank and for determining the depth of the layer.

In many instances, cargo oil, e.g. crude or refined oil which is loaded onto tanker ships is contaminated with substantial amounts of water. If payment for the purchased oil is based on the measured volume of total liquid in the cargo tanks, the final cost to a buyer may be substantially inflated since he pays for the useless water ar cargo oil prices. In many actual cargo oil purchasing situations existing today, the buyer is allowed to deduct the volume of water in the cargo tanks only if he can prove that it was pumped aboard with the cargo oil and was not already present in the tanks before the cargo oil was loaded.

Since water inadvertently left in the tanks (e.g. seawater used for ballast, etc.), will have a substantially different composition from the water loaded with the cargo oil (e.g. formation water produced with the crude or condensate from steam used in processing the produced oil, etc.), the origin of the water in question can readily be established if a sample of the water can be obtained from a cargo tank for analysis after it has been loaded.

Further, by knowing the origin of any water in a loaded cargo tank, steps can be taken to alleviate the contamination problem. That is, if the water is being pumped in with the cargo oil, further processing of the cargo oil can be undertaken to remove the water before loading or if the water is originally present in the tank, further steps can be taken aboard the ship to remove the water before loading. A need exists, therefore, both for obtaining a sample of any water or water-oil emulsion that may be present in a cargo tank after it has otherwise been loaded with crude or refined oil and for determining the depth of water or water-oil emulsion layer in the tank.

Several sampling devices have been proposed for this purpose. For example, U.S. Patent No. 4,196,627 discloses a sampling device which comprises a flexible conduit, normally closed at its upper end. The conduit is lowered with a sounding bob into a filled cargo tank until the lower end of the conduit is positioned within the water layer on the bottom of the tank. The conduit is then opened and suction is applied to withdraw a sample of the water through the conduit. Another sampling device is disclosed in our European Patent Publication No. 24825 and comprises a cylinder with an internal piston which can be lowered on a line into the liquid to be sampled. The line is then lifted to raise the piston relative to the cylinder to draw the liquid to be sampled into the cylinder.

Other sampling devices for obtaining samples from a liquid-filled tank are disclosed in U.S. Patents 1,511,591; 2,593,830; and 3,129,513.

U.S. Patent No. 2,678,563 discloses a liquid sampling device in which a cylinder carried by a chain or rope is normally open at its upper end and normally closed at its lower end by means of a valve. The value is actuated by a pin which projects from the bottom end of the cylinder to open the valve when the apparatus engages the bottom of a liquid-filled container and close the valve when the apparatus is lifted from engagement with the bottom of the container. In addition, U.S. Patent No. 1,759,444 discloses a similar liquid sampling device in which the valve is slidably mounted in a support assembly located on a bottom closure member of the cylinder and which is resiliently urged into its closed position.

According to the present invention, there is provided apparatus for obtaining a liquid sample from near the bottom of a liquid-filled container comprising a sample chamber normally open at its upper end; means for raising and lowering the sample chamber into and out of the liquid-filled container; a bottom closure member affixed to the lower end of said sample chamber to prevent liquid flow into the sample chamber, the bottom member having an inlet opening therethrough; a valve for normally closing the inlet opening; and an actuator for opening the valve to permit liquid flow through the inlet opening into the sample chamber when the apparatus engages the bottom of the liquid-filled container and to close the valve when the apparatus is lifted from engagement with the bottom of the container, characterized in that the actuator comprises an actuator plate slidably mounted on the bottom closure member; and a valve lifter mounted on the upper surface of the actuator plate and adapted to engage and lift the valve to an open position when the actuator plate is moved upwardly relative to the bottom closure member.

In operation, the liquid sampling apparatus is lowered into the container on a line. As the sampling apparatus descends, the cylinder will fill with liquid from the container through the openings in the top plate. When the actuator plate engages the bottom of the container, the cylinder will continue to move downward under its own weight with relation to said actuator plate so that the valve lifter on the actuator plate opens the valve. This allows the liquid from the liquid layer at the bottom of the container to displace the liquid already in the cylinder until the level inside the cylinder equals the depth of the layer of the sample liquid. The sampling apparatus is then lifted off the bottom of the container; this allows the bottom plate to move upward in relation to the actuator plate so that the valve lifter moves out of contact with the valve, thereby allowing the spring to close the valve. The sampled liquid is trapped in the cylinder for measurement and analysis after the sampling apparatus is removed from the container.

Further features of the invention are described below with reference to a preferred embodiment of the apparatus shown in the accompanying drawings in which:

FIG. 1 is a partial vertical sectional view of the liquid sampling apparatus in an operable position within a crude oil cargo tank;

FIG. 2 is a section view, partly broken away, of the liquid sampling apparatus;

FIG. 3 is a cross-sectional view taken along line 3—3 of FIG. 2; and

FIG. 4 is a section view of a modified valve actuator plate.

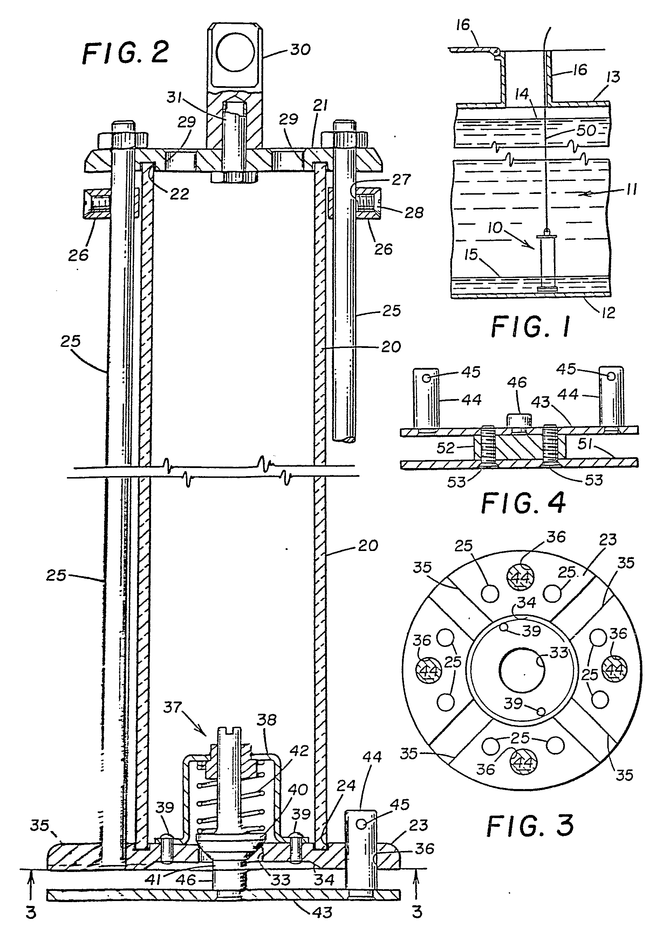

Referring to the drawings, FIG. 1 discloses liquid sampling apparatus 10 in an operable position within cargo tank 11 of a tanker ship. Tank 11 has a bottom 12 and a top normally formed by deck 13 and is shown substantially filled with cargo oil 14 which has an underlying layer 15 of water, water oil emulsion or both in it. Hatch 16 on deck 13 provides entry into tank 11.

Sampling apparatus 10 is comprised of an elongated cylinder 20 which is preferably made from a sturdy, transparent material such as polymethylmethacrylate, e.g. Plexiglas or Lucite (Trade marks). Top closure member, e.g. top plate 21 has a circumferential groove 22 which receives the upper end of cylinder 20. Bottom closure member, e.g. bottom plate 23 has a circumferential groove 24 which receives the lower end of cylinder 20. Top plate 21 and bottom plate 23 are held in place on cylinder 20 by a plurality of of tie rods 25 which secure the two plates together and which also provide protection for cylinder 20 from accidental scratching, fracturing, or the like during handling or storage. An alignment ring 26 may be provided near the upper ends of the rods 25. Ring 26 has openings 27 spaced to align tie rods 25 properly before assembling top plate 21 thereon. Ring 26 is held in place on the tie rods 25 by means of set screws 28.

A plurality of openings 29 are provided through top plate 21 for a purpose described below. Eye 30 is also provided on the upper surface of the top plate 21 and is shown as being attached to top plate 21 by means of bolt 31. However, it should be understood that eye 30 could be made integral with top plate 21 or attached thereto by any other suitable means, e.g. welding.

Bottom plate 23 has a plurality of tapped holes (FIG. 3) properly spaced to receive the lower ends of tie rods 25. Plate 23 also has an inlet opening 33 which communicates with recess 34 which, in turn, is formed on the lower surface of plate 23. Radial grooves 35 are formed on the lower surface of plate 23 and extend from the outer circumference of plate 23 into recess 34 thereby providing fluid passages across the bottom of plate 23 as will be described in more detail below. A second plurality of openings 36 are formed through plate 23 for a purpose described below.

Valve 37 is affixed to the upper surface of bottom plate 23 and normally closes inlet opening 33. Valve means 37 comprises a support member 38 which is affixed to plate 23 by pins 39. Valve body 40 is slidably mounted in cage 39 and seats with inlet opening 33 to close the opening. The lower end 41 of valve body 40 extends through inlet opening 33 and terminates approximately even with the lower surface of plate 23. Spring 42 normally biases valve body 40 to a closed position.

Valve actuator plate 43 has a plurality of guide pins 44 spaced on it which are adapted to be slidably received by openings 36 through plate 23. Guide pins 44 are positioned in their respective openings 36, and roll pins 45 or the like are placed through guide pins 44. This limits downward movement of guide pins 44 and thereby retains actuator plate 43 on bottom plate 23 during the lowering and lifting of sampling apparatus 10. Valve lifter 46 is positioned on the upper surface of actuator plate 43 and is affixed thereto by peening, welding or the like.

In operation, line 50, e.g. thin braided wire, (FIG. 1) is attached to eye 30 and sampling apparatus 10 is lowered into cargo tank 11. Inlet opening 33 on bottom plate 23 is closed by valve 40 due to the bias of spring 42. As sampling apparatus 10 is submerged in the oil 14, cylinder 20 will fill with oil through openings 29 in top plate 21. When sampling apparatus 10 reaches the bottom 12 of tank 11, valve actuator plate 43 comes to rest on bottom 12. Due to its own weight, cylinder 20 continues downward movement on the guide pins 44 of actuator plate 43 so that valve lifter 46 engages and opens valve 40.

Water from layer 15 then flows through grooves 35 on bottom plate 23 and into cylinder 20 through inlet opening 33. The water continues to displace the oil in cylinder 20 through openings 29 in top plate 21 until the oil/water interface within cylinder 20 is at the same depth as the surrounding oil/water interface 15 in tank 11. To ensure that the level of water inside cylinder 20 is equalized with the depth of layer 15, sampling apparatus 10 is left at rest on bottom 12 for at least 60 seconds.

Sampling apparatus 10 is then lifted from tank 11 by line 50. Initial upward movement of sampling apparatus 10 causes bottom plate 23 to move upward in relation to actuator plate 43 (hence valve lifter 46) which allows spring 42 to bias valve body 40 downward to close inlet opening 33. This traps the water in cylinder 20 and maintains the interface level which exists in cylinder 20 for observation, measurement, and analysis once sampling apparatus 10 is retrieved from tank 11. To aid the measurement of the depth of layer 15, cylinder 20 may include calibrations thereon (not shown) which permits direct reading of the interface height in cylinder 20.

A unique feature of sampling apparatus 10 is that its performance is not degraded by the existence of an emulsion layer between the oil and water. A sharp interface will be shown at the equivalent interface level, i.e., where the level would be if the water and oil had had sufficient time to separate completely. Thus, the interface shown in the cylinder is a true representative measure of the actual depth of water layer 15 in tank 11.

Further, the principle of operation makes the design of sampling apparatus 10 effective for virtually any diameter and length of cylinder 20, provided cylinder 20 is long enough to extend above the oil-water interface, or any emulsion layer, (e.g. layer 15) in tank 11 when sampling apparatus 10 is on the tank bottom 12. For example, a typical sampling apparatus 20 may incorporate a cylinder 50 cm long with an internal diameter of 45 mm and an external diameter of 50 mm.

In some instances, sludge or like matter may be present on bottom 12 of tank 11 which might interfere with the normal operation of sampling apparatus 10. In such a case, valve actuator plate 43 may be modified as shown in FIG. 4. A foot plate 51 is spaced from actuator plate 43 by means of spacer member 52 and is connected thereto by means of screws 53 or the like. Now when sampling apparatus 10 is lowered in tank 11, foot plate 51 will engage bottom 12 and grooves 35 (i.e. liquid passages) in bottom plate 23 will lie above the sludge layer when valve body 40 is opened by lifter 46. Of course, the thickness of spacer member 52 will vary in different instances depending on the thickness of the particular sludge layer involved.

In some instances the depth of water level 15 in tank 11 may exceed the original length of cylinder 20. In addition to using a longer cylinder in the original assembly of sampling apparatus 10, a sampling apparatus having a shorter cylinder can be modified similarly as described above by attaching extension members (similar to spacer members 52 in FIG. 4), e.g. up to 60 cm. in length, to bottom plate 43 so that sampling apparatus 10 is elevated sufficiently when on bottom to measure the water depth. The interface depth in cylinder 20 plus the length of the extension will equal the depth of the measured water level.

## Claims

1. Apparatus for obtaining a liquid sample from near the bottom of a liquid-filled container (11) comprising a sample chamber (20) normally open at its upper end; means (50) for raising and lowering the sample chamber (20) into and out of the liquid-filled container (11); a bottom closure member (23) affixed to the lower end of the sample chamber (20) to prevent liquid flow into the sample chamber, the bottom member (23) having an inlet opening (33) therethrough; a valve (37) for normally closing the inlet opening (33); and an actuator (43, 46) for opening the valve (33) to permit liquid flow through the inlet opening (33) into the sample chamber (20) when the apparatus engages the bottom of the liquid-filled container (11) and to close the valve (37) when the apparatus is lifted from engagement with the bottom of the container (11), characterized in that the actuator comprises an actuator plate (43) slidably mounted on the bottom closure member (23); and a valve lifter (46) mounted on the upper surface of the actuator plate (43) and adapted to engage and lift the valve (37) to an open position when the actuator plate (43) is moved upwardly relative to the bottom closure member (23).

2. Apparatus as claimed in claim 1, characterized in that a top closure member (21) is affixed to the upper end of the sample chamber (20) and has openings (29) therethrough to permit liquid flow through the openings (29) into and out of the sample chamber (20).

3. Apparatus as claimed in claim 1 or claim 2 characterized in that a spacer member (52, 51) is carried by and projects below the actuator plate (43) to maintain the actuator plate (43) above the bottom of the container (11) when the apparatus engages the bottom of the container (11).

## Patentansprüche

1. Probennahmevorrichtung für eine Flüssigkeitsprobe in der Nähe des Bodens eines mit Flüssigkeit gefüllten Behälters (11) mit einer normalerweise an ihrem oberen Ende offenen Probenkammer (20), einer Einrichtung zum Anheben und Absenken der Probenkammer (20) aus und in den mit Flüssigkeit gefüllten Behälter (11), einem am unteren Ende der Probenkammer (20) befestigten Bodenverschlußteil (23) zur Verhinderung eines Flüssigkeitsflusses in die Probenkammer, wobei das Bodenverschlußteil (23) eine durchgehende Einlaßöffnung (33) hat, einem Ventil (37) zum normalerweisen Verschließen der Einlaßöffnung (33) und einem Betätigungsteil (43, 46) zum Öffnen des Ventils (33), damit ein Flüssigkeitsfluß durch die Einlaßöffnung (33) in die Probenkammer (20) ermöglicht wird, wenn die Vorrichtung mit dem Boden des mit Flüssigkeit gefüllten Behälters (11) in Berührung tritt und zum Schließen des Ventils (37), wenn die Vorrichtung aus der Berührung mit dem Boden des Behälters angehoben wird, dadurch gekennzeichnet, daß das Betätigungsteil eine gleitend am Bodenverschlußteil (23) befestigte Betätigungsplatte (43) und einen an der Oberfläche der Betätigungsplatte (43) befestigten Ventilheber (46), der zur Berührung und zum Anheben des Ventils (37) in eine offene Stellung geeignet ist, wenn die Betätigungsplatte (43) relativ zum Bodenverschlußteil (23) nach oben bewegt wird, umfaßt.

2. Probenahmevorrichtung nach Anspruch 1, dadurch gekennzeichnet, daß am oberen Ende der Probenkammer (20) ein Deckel (21) mit durchgehenden Öffnungen (29) für einen durch die Öffnungen in die Probenkammer (20) hinein und einen aus der Probenkammer (20) hinaus möglichen Flüssigkeitsfluß befestigt ist.

3. Probenahmevorrichtung nach Anspruch 1 oder 2, dadurch gekennzeichnet, daß sich ein Distanzstück (52, 51) unterhalb der Betätigungsplatte (43) erstreckt und von der Betätigungsplatte (43) getragen wird, um die Betätigungsplatte (43) oberhalb des Bodens des Behälters (11) zu halten, wenn die Vorrichtung den Boden des Behälters (11) berührt.

**Revendications**

1. Appareil de prélèvement d'un échantillon liquide à proximité du fond d'un récipient (11) rempli de liquide, comprenant une chambre d'échantillonnage (20) normalement ouverte à son extrémité supérieure, un dispositif (50) destiné à soulever et abaisser la chambre (20) afin qu'elle pénètre dans le récipient (11) et en sorte, un organe inférieur de fermeture (23) fixé à l'extrémité inférieure de la chambre d'échantillonnage (20) afin qu'il empêche la circulation du liquide vers l'intérieur de la chambre, l'organe inférieur (23) ayant une ouverture (33) d'entrée qui le traverse, une soupape (37) destinée à fermer normalement l'ouverture d'entrée (33), et un organe de manoeuvre (43, 46) destiné à ouvrir la soupape (37) et à permettre la circulation du liquide par l'ouverture d'entrée (33) vers l'intérieur de la chambre d'échantillonnage (20) lorsque l'appareil est au contact du fond du récipient (11) repli de liquide, et à fermer la soupape (37) lorsque l'appareil est soulevé à distance du fond du récipient (11), caractérisé en ce que l'organe de manoeuvre comporte une plaque (43) qui peut coulisser sur l'organe inférieur de fermeture (23), et un organe de soulèvement de soupape (46) monté à la face supérieure de la plaque de manoeuvre (43) et destiné à venir au contact de la soupape (37) et à la soulever en position d'ouverture lorsque la plaque de manoeuvre (43) est déplacée vers le haut par rapport à l'organe inférieur de fermeture (23).

2. Appareil selon la revendication 1, caractérisé en ce qu'un organe supérieur de fermeture (21) est fixé à l'extrémité supérieure de la chambre d'échantillonnage (20) et a des ouvertures (29) qui le traversent afin que le liquide puisse s'écouler par les ouvertures (29) vers l'intérieur de la chambre d'échantillonnage (20) et hors de celle-ci.

3. Appareil selon l'une des revendications 1 et 2, caractérisé en ce qu'un organe d'entretoise (52, 53) est porté par la plaque de manoeuvre (43) et dépasse sous celle-ci afin que la plaque de manoeuvre (43) soit maintenue au-dessus du fond du récipient (11) lorsque l'appareil est au contact du fond du récipient (11).

FIG. 2

FIG. 1

FIG. 4

FIG. 3